**Europäisches Patentamt**

**European Patent Office**

**Office européen des brevets**

(11) Veröffentlichungsnummer : **0 441 998 B1**

(12) **EUROPÄISCHE PATENTSCHRIFT**

(45) Veröffentlichungstag der Patentschrift :
**02.06.93 Patentblatt 93/22**

(21) Anmeldenummer : **90102739.1**

(22) Anmeldetag : **12.02.90**

(51) Int. Cl.⁵ : **G01C 19/72**

(54) Faseroptisches Sagnac-Interferometer mit digitaler Phasenrampenrückstellung zur Drehratenmessung.

(43) Veröffentlichungstag der Anmeldung :
**21.08.91 Patentblatt 91/34**

(45) Bekanntmachung des Hinweises auf die
Patenterteilung :
**02.06.93 Patentblatt 93/22**

(84) Benannte Vertragsstaaten :
**CH DE ES FR GB IT LI**

(56) Entgegenhaltungen :
**EP-A- 0 168 292**
**EP-A- 0 294 915**
**EP-A- 0 359 666**
**GB-A- 2 152 207**

(73) Patentinhaber : **LITEF GmbH**
**Lörracher Strasse 18**
**W-7800 Freiburg/Br. (DE)**

(72) Erfinder : **Spahlinger, Günter, Dr.**
**Aspergstrasse 35**
**W-7000 Stuttgart 1 (DE)**

(74) Vertreter : **TER MEER - MÜLLER -**
**STEINMEISTER & PARTNER**
**Mauerkircherstrasse 45**
**W-8000 München 80 (DE)**

## Beschreibung

Die Erfindung betrifft ein faseroptisches Sagnac-Interferometer zur Drehratenmessung, bei dem zwei aus einer Lichtquelle stammende, durch einen Polarisator polarisierte und durch Strahlteilung erzeugte Lichtstrahlen in entgegengesetzten Richtungen in eine Faserspule eingestrahlt und anschließend wiedervereinigt werden, bei dem das entstehende Interferenzbild nach Durchlauf durch den Polarisator eine Detektoreinrichtung beaufschlagt, deren Ausgangssignal der Lichtintensität des Interferenzbildes entspricht, bei dem die beiden Lichtstrahlen mittels eines in der Faserspule liegenden Phasenmodulators durch ein aus mehreren variablen Anteilen zusammengesetztes, durch eine Modulo-Operation auf einen Wert von $2\pi$ begrenztes Signal moduliert werden, wobei ein erster Signalanteil ein durch einen Integrator erzeugtes Rampensignal ist, welches nichtreziproke, inkrementale Phasenverschiebungen der beiden Lichtstrahlen kompensiert, und ein zweiter Signalanteil einen ganzzahligen positiven Wert von $\pi/2$ jeweils für eine Zeit $t_0$ mit $t_0$ = Laufzeit jedes der Lichtstrahlen durch die Faserspule im Ruhezustand darstellt, bei dem das verstärkte Photodetektorausgangssignal einem mit der Frequenz $f_0 = 1/t_0$ getakteten ersten Synchrondemodulator zugeführt wird, bei dem das demodulierte Ausgangssignal in einen digitalen Integrator integriert und nach Digital/Analog-/Wandlung als Rampensignal auf den Phasenmodulator zurückgeführt wird, um die nichtreziproken Phasenverschiebungen der Lichtstrahlen zu kompensieren, und bei dem ein Prozessor die Steuer- und Synchronisationssignale für den ersten Synchrondemodulator, einen Analog/Digital-Wandler und den digitalen Integrator liefert.

Zum Messen nichtreziproker Phasenverschiebungen in einem faseroptischen Sagnac-Interferometer, auch Ringinterferometer genannt, ist es aus der Druckschrift DE-A1-31 44 162 bekannt, den im Bereich eines Eingangs der Faserspule liegenden Phasenmodulator einerseits mit einem mit der Frequenz $f_0 = \frac{1}{2} t_0$ umschaltbaren Phasenhub bestimmter Amplitude und andererseits mit einer den Phasenhub ebenfalls verschiebenden Sägezahnspannung zur Nachregelung der nichtreziproken Phasenverschiebungen z. B. aufgrund von Drehraten, zu beaufschlagen, wobei mit $t_0$ die Laufzeit jedes der Lichtstrahlen durch die Faserspule bezeichnet ist. Die Steigung der kompensierenden oder rückstellenden Sägezahnspannung (Phasenrampe) entspricht der Drehrate, ist also proportional zu $\Delta\varphi_0/t_0$, wobei mit $\Delta\varphi_0$ die nichtreziproke Phasenverschiebung, beispielsweise verursacht durch eine Drehbewegung, bezeichnet ist. In der Praxis jedoch ist das in der genannten DE-Druckschrift beschriebene, sogenannte Phasenrampen-Rückstellverfahren kaum brauchbar, weil für inertiale Drehratenmessungen Genauigkeiten, insbesondere hinsichtlich der umschaltbaren Phasenhübe, der Amplitude bzw. Steigung des Rückstellsignals sowie des Proportionalitäts- oder Skalenfaktors verlangt werden, die sich in analoger Schaltungstechnik nicht gewährleisten lassen.

Mit der US-A-4 705 399 ($\triangleq$ EP-A1-0 168 292) ist eine bemerkenswerte Weiterentwicklung des in der genannten DE-Druckschrift grundsätzlich beschriebenen Rampenrückstellverfahrens für faseroptische Ringinterferometer bekannt geworden, das bei der Signalauswertung und -aufbereitung vollständig digital arbeitet, so daß sich die erforderliche Signalpräzision insbesondere hinsichtlich der Genauigkeit der umschaltbaren Phasenhübe und des Rampen-Rückstellsignals mit eindeutiger Zuordnung einer automatischen Meßbereichumschaltung sowie einer Korrektur der Skalenfaktoren gewinnen lassen. Anhand der Fig. 3, die - in vereinfachter Darstellung - dem Stand der Technik nach Fig. 14 der genannten Druckschrift US-A-4 705 399 entspricht (vgl. auch H.C. Lefèvre et al. in Integrated Optics: "A practical solution for the Fiber-Optic Gyroscope", SPIE Vol. 719, Fiber Optic Gyros, 1986) - wird zunächst das Funktionsprinzip des digitalen Phasenrampenrückstellverfahrens für faseroptische Drehratensensoren nach dem Stand der Technik erläutert, wobei hinsichtlich der Einzelheiten auf die genannte Literatur verwiesen wird:

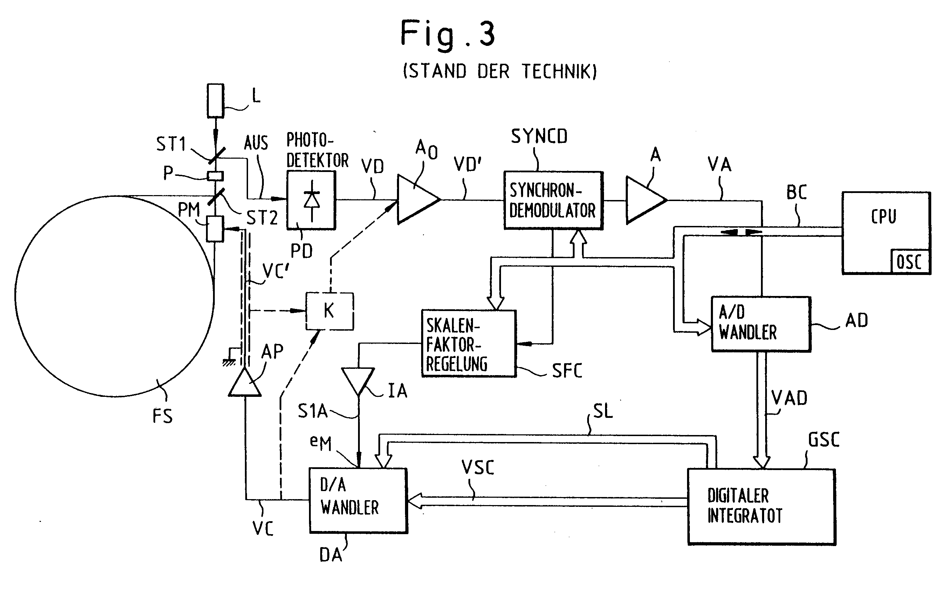

Die schematische und vereinfachte Darstellung der Fig. 3 eines dem genannten Stand der Technik entsprechenden Sagnac-Interferometers mit geschlossener Faserschleife zeigt eine Lichtquelle L, beispielsweise einen Laser, dessen parallele Lichtstrahlen durch einen Polarisator P polarisiert und über einen Strahlteiler ST2 in zwei Lichtstrahlen aufgeteilt sowie in entgegengesetzter Richtung in eine Interferometer-Faserspule FS eingestrahlt werden. Die Faserspule FS wird vorzugsweise aus einer optischen Monomodefaser bestehen. Der Strahlteiler ST2 wirkt gleichzeitig als Mischer zur Rekombination der beiden Lichtstrahlen nach Durchlaufen der Faserspule FS. Das Interferenzsignal der beiden überlagerten Lichtstrahlen gelangt nach Durchlaufen des Polarisators P über einen zweiten Strahlteiler ST1 und dessen Ausgangszweig AUS auf einen Photodetektor PD, der die Intensität des Interferenzbildes abtastet. Wird mit $\Delta\varphi_0$ die Phasendifferenz zwischen den beiden sich in entgegengesetzten Richtungen in der geschlossenen Faserspule FS ausbreitenden Lichtstrahlen bezeichnet, so gilt, solange keine nichtreziproken Störungen vorliegen: $\Delta\varphi_0 = 0$. Hinsichtlich des mathematischen Zusammenhangs zwischen der Phasendifferenz $\Delta\varphi_0$ und der Drehrate oder Drehgeschwindigkeit, der optischen Leistungsdichte am Eingang des Photodetektors PD und der Meßempfindlichkeit wird auf die genannte Literatur verwiesen. Dort ist auch beschrieben, wie die Empfindlichkeit des Interferometers durch Beaufschlagung der beiden gegenläufigen Lichtstrahlen in der Faserspule FS durch Einführung eines konstanten, nichtreziproken Bias erhöht werden kann, und zwar so, daß mittels eines Phasenmodulators PM die beiden gegen-

EP 0 441 998 B1

läufigen Lichtstrahlen (Lichtwellen) periodisch in den Arbeitspunkt höchster Empfindlichkeit des Interferometers um Winkel von $(2n + 1)\cdot\pi/2$ verschoben werden, wobei n eine ganze Zahl ist. Zu diesem Zweck wird der Phasenmodulator PM also zunächst mit einem Signal $\varphi_1(t)$ erregt, das eine periodische Phasenverschiebung von beispielsweise $\pm\pi/2$, $3\pi/2$, ..., bewirkt und dessen Periode $2t_0$ beträgt, wobei mit $t_0$ die Laufzeit einer Lichtwelle in der Faserspule FS bezeichnet ist.

Bei der Schaltung nach Fig. 3 werden, wie in der genannten US-Patentschrift beschrieben, nichtreziproke Phasenverschiebungen durch eine negative Rückkopplung auf den Phasenmodulator PM kompensiert durch ein sogenanntes Phasenrampensignal, dessen Steigung proportional ist zu $\Delta\varphi/t_0$, d. h. zu $\Delta\varphi$, also der nichtreziproken Phasenverschiebung. Das rückstellende Phasenrampensignal ist bei der Schaltung nach Fig. 3 ein Sägezahn- oder Treppenstufensignal, bei dem die Amplitude eines Sägezahns bzw. die Höhe einer Treppenstufe gleich $\Delta\varphi$ beträgt, während die Dauer eines Sägezahns oder einer Treppenstufe der Laufzeit $t_0$ bzw. einem ungeradzahligen Vielfachen von $t_0$ entspricht.

Dieses in der Literatur, insbesondere der genannten US-A-4 705 399 beschriebene digitale Phasenrampenprinzip hat gegenüber einer analogen Lösung den entscheidenden Vorteil, daß die Skalenfaktoren des Phasenmodulationssteuersignals und des Phasenrampenrückstellsignals wenigstens im Prinzip korrigiert sind und eine präzise Definition der Sägezahnamplituden des Rückstellsignals gewährleistet ist.

Die Funktion der Schaltung nach Fig. 3 ist zur Erzeugung einer den Arbeitspunkt optimierenden reziproken, alternierenden Phasenverschiebung im Takt der Frequenz $f_0$ sowie des stufenförmigen Rampenrückstellsignals einschließlich einer Skalenfaktorregelung wird nachfolgend kurz beschrieben:

Das elektrische Signal VD des Photodetektors PD wird über einen Impedanzwandler und Verstärker $A_0$ angehoben, dessen Ausgangssignal VD' einen Synchrondemodulator SYNCD speist, der auf die Abtastfrequenz $f_0 = \frac{1}{2}t_0$ synchronisiert ist. Das demodulierte Ausgangssignal gelangt über einen in der Regel mit einem Filter kombinierten Verstärker A als Signal VA auf einen Analog/Digital-Wandler AD, dessen digitales Ausgangssignal proportional ist zur Drehrate und eine Vorzeicheninformation hinsichtlich der Drehrichtung enthält. Das Signal VAD gelangt sodann auf eine Schaltung GSC, die im wesentlichen einen digitalen Integrator beinhaltet und ein Phasensteuersignal VSC liefert, d. h. ein zusammengesetztes Signal, bestehend aus dem digitalen Phasenrampen-Rückstellsignal und dem digitalen Phasenmodulationssignal. Das zusammengesetzte Digitalsignal VSC wird anschließend in einem Digital/Analog-Wandler DA in eine analoge Steuerspannung VC gewandelt und über einen Treiberverstärker AP als Steuerspannung auf den Phasenmodulator PM gegeben.

Die soweit beschriebene Schaltung zur Erzeugung des Phasenmodulationssignals und des Phasenrampen-Rückstellsignals wird von einem Zentralprozessor CPU über einen bidirektionalen Bus BC synchronisiert und gesteuert, der mit einem quarzstabilisierten Oszillator OSC verbunden ist, der die Frequenz $f_0$ liefert.

Abgesehen von der auf einen bestimmten Drehwinkel, z. B. vier Bogensekunden, bezogenen Anzahl von Bits pro Wort, die der Kapazität eines in der Schaltung GSC enthaltenen Addierers entsprechen, liefert letzterer Überlaufsignale SL. In Abhängigkeit von diesen Überlaufsignalen SL und in Übereinstimmung mit dem Taktsignal des Oszillators OSC generiert der Zentralprozessor CPU die verschiedenen Steuer- und Synchronisationssignale, wobei, um eine Skalenfaktorkorrektur zu ermöglichen, in Abhängigkeit von der Überlaufbedingung der Modulationshub zwischen einem "Modus A" und einem "Modus B" umgeschaltet wird, derart, daß für den Modus A ein Modulationshub von beispielsweise $\pm\pi/2$ und für den Modus B ein Modulationshub von $\pm 3/2\pi$ gilt. Wie in der genannten Literatur beschrieben, sind die detektierten Amplitudendifferenzen zwischen den Betriebszuständen mit unterschiedlichen Modulationshüben ein Maß für den Skalenfaktorfehler zu den Zeitpunkten des Phasenrampensignalüberlaufs. Um diesen Skalenfaktorfehler zu korrigieren, ist die bekannte Schaltung nach Fig. 3 mit einem Demodulator SFC ausgestattet, der die Amplitudenunterschiede des $f_0$-Modulationssignals im Modus A (Phasenhub z. B. $\pm\pi/2$) und Modus B (Phasenhub z. B. $\pm 3/2\pi$) erfaßt und dieses demodulierte Signal über einen integrierenden Verstärker IA als analoges Korrektursignal SIA auf einen korrigierenden Analogeingang $e_M$ des Digital/Analog-Wandlers DA gibt.

Dieses soweit anhand der Fig. 3 kurz beschriebene Funktionsprinzip des digitalen Phasenrampen-Rückstellverfahrens für faseroptische Drehratensensoren, bei dem die Steigung der Phasenrampe ein Maß für die rückgestellte Drehrate ist und bei dem in der Rücksprungphase zur Gewinnung eines Korrektursignals für den Skalenfaktor eine Umschaltung des Modulationshubs im Verhältnis 1:3 erfolgt, führt in der Praxis des Betriebs von solchen inertialen Drehratenmeßeinrichtungen zu erheblichen Schwierigkeiten aus folgenden Gründen:

Die Umschaltung von "Modus A" auf "Modus B" ist direkt abhängig vom Rampenwert des rückstellenden Sägezahnsignals und damit vom Drehwinkel des Kreisels. Ein Rampendurchlauf kann dabei einem Winkelinkrement von beispielsweise ca. vier Bogensekunden entsprechen. Die Modulationshubumschaltung bewirkt aber über die Verdreifachung der Amplitude des Modulationssignals und über Einstreuungen desselben in den empfindlichen Signalpfad des Photodetektorsignals VD effektiv eine Umschaltung des Kreiselbias. Diese unerwünschten Einstreueffekte sind in der Schaltung nach Fig. 3 durch gestrichelte Linien und den Kopplungsfaktor K angedeutet. Da diese Umschaltung des Modulationshubsignals aber drehwinkelabhängig ist, führt sie

3

zu einem Unempfindlichkeitsbereich ("lock-in") des Kreisels. Es läßt sich auch, wie nachfolgend erläutert, zeigen, daß dieser Effekt außerhalb der Lock-in-Zone zu einer Skalenfaktor-Nichtlinearität führt.

Wie in Fig. 13 der Druckschrift US-A-4 705 399 gezeigt, ergibt sich bei Vorliegen eines Skalenfaktorfehlers eine unterschiedliche mittlere Intensität I des Photodetektorsignals VD bei Modulationshüben des Modus A bzw. den Modulationshüben des Modus B. Diese Intensitätsdifferenz wird im integrierenden Verstärker IA aufintegriert und liefert das analoge Korrektursignal an einen Eingang $e_M$ des Digital/Analog-Wandlers DA. Die Intensitätswechselfrequenz ist gleich der Wechselfrequenz von Modus A auf Modus B und somit gleich der Rampensignal-Rücksprungfrequenz, da die Umschaltung z. B. von Modus A auf Modus B durch Rampenüberlauf (Signal SL eines Addierers) entsteht. Diese Wechselfrequenz ist drehratenproportional, d. h. gemäß dem in der genannten US-Patentschrift erläuterten Beispiel entspricht ein Rücksprung von $2\pi$ einem Winkelinkrement von 5 Bogensekunden; bei 1 Hz Rücksprungfrequenz entspricht dies einer Drehrate von 5°/h.

Bei kleinen Drehraten kann diese Wechselfrequenz beliebig klein werden, weshalb der integrierende Verstärker IA nur selten die Intensitätsunterschiedinformation erhält. In den dann beliebig langen Intervallen, in denen der Modus nicht wechselt, fehlt dem integrierenden Verstärker IA diese Information, und jeder kleine elektrische Nullpunktfehler an seinem Eingang läßt seine Ausgangsgröße, also das Skalenfaktorkorrektursignal SIA weglaufen (driften). Aus diesem Grund ist der Skalenfaktor bei niedrigen Drehraten anfällig gegen Driften des integrierenden Verstärkers IA. Zwar ist der durch Skalenfaktordriften hervorgerufene prozentuale Drehratenfehler, ausgedrückt in absoluten Drehratenwerten, bei niedrigen Drehraten klein. Problematisch wird aber vor allem ein plötzliches starkes Ansteigen der Drehrate, da dann der Skalenfaktor noch "falsch" ist und somit auch hohe absolute Drehratenfehler entstehen, zumindest so lange, bis der Skalenfaktorregelkreis wieder im eingeschwungenen Zustand ist.

Es wäre nun naheliegend, die elektromagnetischen Einstreuungen (Störungen mit einem Koppelfaktor K; siehe Fig. 3) durch EMV-Maßnahmen (EMV = elektro-magnetische Verträglichkeit; englisch: EMC measures, electro-magnetic compatibility), also insbesondere durch Abschirmungen (in Fig. 3 angedeutet durch Abschirmung der Verbindungsleitung vom Treiberverstärker AP zum Phasenmodulator PM) und den Einbau von Filtern in Signal- und Spannungszuführleitungen beseitigen oder zumindest vermindern zu wollen. Bei dem bekannten Interferometeraufbau nach Fig. 3 ergibt sich jedoch eine spezielle EMV-Problematik: Das Signal VSC bzw. VC, VC' beinhaltet die Modulationsfrequenz $f_0 = \frac{1}{2}t_0$, die im Oszillator OSC bzw. über den Prozessor CPU erzeugt wird. Das Photodetektorsignal VD beinhaltet aber die Drehrateninformation mit derselben Frequenz und Phasenlage. Dieses Signal wird im Synchrondemodulator SYNCD detektiert. Die Schaltungsgruppen, die die Modulationsgröße der Frequenz $f_0$ erzeugen, und die Schaltungsteile, die das drehratenempfindliche Signal gleicher Frequenz führen, stehen in engem räumlichem Zusammenhang und müssen in aller Regel aus einer gemeinsamen Stromversorgungseinrichtung gespeist werden. Damit ist die Gefahr der Einstreuung von elektromagnetischer Energie der Frequenz $f_0$ in den empfindlichen Signalpfad (Signal VD) offenkundig. Sperrfilter für $f_0$ in den Signalleitungen sind nicht möglich, da die gewünschte Signalinformation bei eben dieser Frequenz vorliegt. Unerwünschte Einstreuungen können also z. B. nur durch Abschirmung des Verstärkers $A_0$ und des Synchrondemodulators SYNCD gegen den Rest der Schaltung sowie durch Filterung ihrer Stromzuführung in einem gewissen Umfang vermindert werden.

Ein Zahlenbeispiel für die Einstreuempfindlichkeit wird die besondere Problematik für den Fachmann sofort verdeutlichen: Der Spektralanteil mit der Frequenz $f_0$ im Signal VC bzw. VC' liegt im allgemeinen im Bereich von einigen V. Im Drehratensignal VD dagegen entsprechen - je nach Lichtleistung, Detektorempfindlichkeit und Kreiselskalenfaktor - Spannungen im Bereich einiger nV einer Drehrate von 1°/h. Bei derart großen Amplitudenunterschieden wird ein unerwünschter Einstreupfad trotz aller möglicher EMV-Maßnahmen unvermeidlich sein, wie dies in Fig. 3 durch den Koppelfaktor K zwischen den Signalen VC, VC' und VD symbolisiert ist; natürlich mit unterschiedlichen Einstreuamplituden und damit unterschiedlichen drehratenäquivalenten Fehlern im Signal VD, und zwar abhängig vom Betriebszustand Modus A bzw. B, da letzterer voraussetzungsgemäß eine dreifach höhere Modulationsamplitude als ersterer aufweist und somit eine stärkere Einstreuung bewirkt. Diese unterschiedlichen Einstreuamplituden führen, auf Drehraten bezogen, zu unterschiedlichen Kreiselnullpunktfehlern, die als Biase $B_a$ bzw. $B_b$ bezeichnet werden, je nach momentanem Modulationszustand Modus A bzw. Modus B.

Über den geschlossenen Regelkreis wird damit die Rampensteigung des Rückstellsignals proportional zur Summe der wahren Eingangsdrehrate $D_e$ und des jeweiligen Bias $B_a$ bzw. $B_b$ geregelt, je nachdem, ob Modulationsmodus A bzw. B vorliegt.

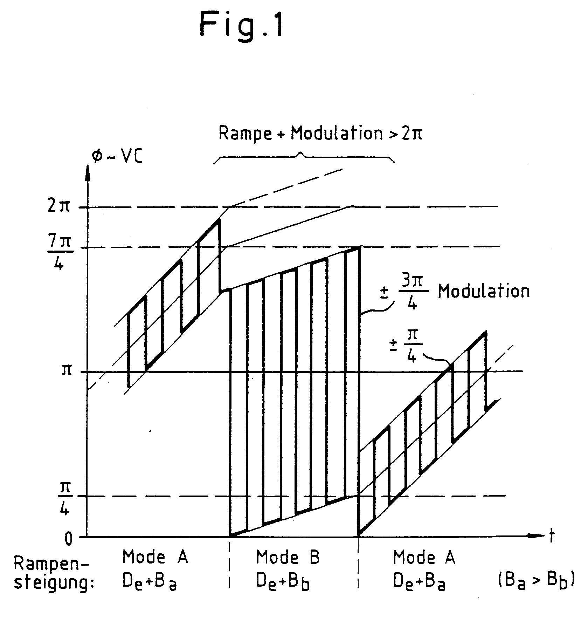

In Fig. 1 der beigefügten Zeichnungen ist ein Beispiel dargestellt, bei dem $D_e + B_a > 0$, $D_e + B_b > 0$ und $B_a > B_b$ gilt, also unterschiedliche Biase $B_a$ bzw. $B_b$ vorliegen. Wird $D_e$ = const. angenommen, so ergeben sich unterschiedliche Rampensteigungen, je nachdem, ob momentan Modus A bzw. Modus B vorliegt, da die Rampensteigung proportional zu $D_e + B_a$ bzw. proportional zu $D_e + B_b$ geregelt wird.

In dem in Fig. 1 dargestellten Beispiel ist die Steigung während des Modus B flacher als im Modus A, da

$B_b < B_a$ vorausgesetzt wird. Somit wird die Verweildauer $t_b$ im Modus B gegenüber der Verweildauer $t_a$ im Modus A größer als dies bei modusunabhängigen Biases ($B_a = B_b$) der Fall wäre. Da jedoch nicht nur $B_a$, $B_b$, sondern auch die Eingangsdrehrate $D_e$ die Rampensteigung in beiden Modi beeinflußt, hängt das Tastverhältnis der Modi ($T_a/T_b$) auch von $D_e$ ab. Daraus folgt die oben angesprochene Skalenfaktor-Nichtlinearität.

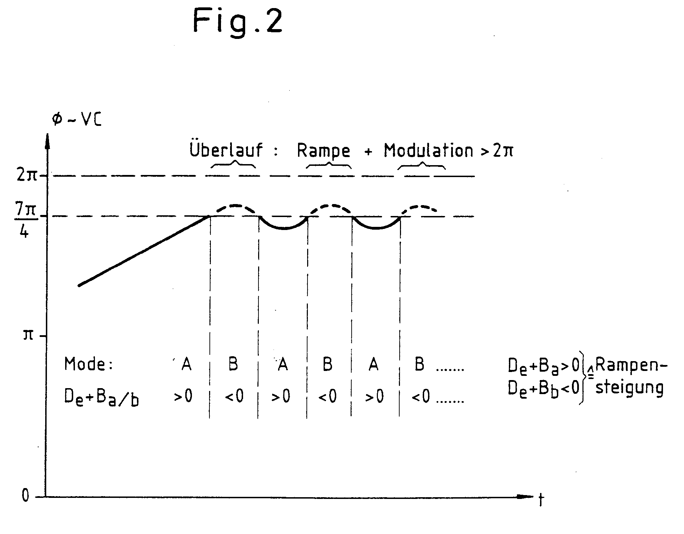

Andererseits tritt der oben erwähnte Lock-in-Effekt in einem Drehratenbereich auf, in dem die Summe ($D_e + B_a$) bzw. ($D_e + B_b$) für beide Modi unterschiedliches Vorzeichen hat, d. h. wenn z. B. gilt ($D_e + B_a$) > 0 bzw. ($D_e + B_b$) < 0. Dieser für kleine Drehraten durchaus realistische Fall ist in Fig. 2 dargestellt:
Die Rampe des Rückstellsignals (zur besseren Übersichtlichkeit der Darstellung ohne Modulation gezeichnet) beginnt z. B. im Modus A mit positiver Steigung, da ($D_e + B_a$) > 0 voraussetzungsgemäß gilt. Erreicht die Rampe den (oberen) Überlaufbereich (Überlaufsignal SL in Fig. 3), so wird auf Modus B gewechselt. Die Regelung steuert dann aber eine negative Rampensteigung an, da jetzt gilt ($D_e + B_b$) < 0, d. h. die Rampensteigung wechselt ihr Vorzeichen und verläßt somit den Überlaufbereich und es gilt wieder Modus A. Zu diesem Modus A gehört aber wieder eine positive Rampensteigung, bis wieder nach Modus B umgeschaltet wird usw. Die Regelung hält sich also "gefangen", d. h. die Interferometeranordnung wird unempfindlich, d. h. befindet sich im Lock-in-Zustand. Wie schnell die in Fig. 2 dargestellte "Zick-Zack-Rampe" zwischen den Modi A und B an der Überlaufgrenze wechselt, bestimmt die Schnelligkeit der Regelung; diese liegt im allgemeinen sehr hoch. Der Lock-in-Zustand gilt für einen Eingangsdrehratenbereich, in dem die angegebenen Ungleichungen erfüllt sind, d. h. der Lock-in-Bereich hat also eine Breite von $|B_a - B_b|$.

Bei der soweit gegebenen Beschreibung ist mit dem jeweiligen Rampenwert der Momentanwert der (unmodulierten) Rampe $\varphi(t)$ gemeint. Dieser Rampenwert ist proportional zum Drehwinkel. Die Rampensteigung $d\phi/dt$ entspricht der zeitlichen Ableitung des Drehwinkels, also der Drehrate. Auf den Punkt gebracht, liegt also die Problematik des bekannten digitalen Rampenrückstellverfahrens darin, daß der Rampenwert, d. h. der Wert des Drehwinkels, das Kriterium dafür ist, ob Betriebsmodus A oder B und damit die unterschiedlichen Biases $B_a$ bzw. $B_b$ vorliegen und wegen $B_a \neq B_b$ die Rampensteigung selbst beeinflussen. Die Skalenfaktorfehlerinformation liegt, wie dargestellt, in Form eines Intensitätsänderungssignals vor, dessen Frequenz drehratenproportional ist und sich zwischen 0 und etwa 100 kHz ändern kann, wenn das theoretische Tastverhältnis der Modulationshübe zwischen Modus A und Modus B 1:3 beträgt. Dem augenscheinlichen Vorteil, daß die informationstragenden Intensitätsänderungen bei hohen Drehraten öfter vorkommen und somit bei hohen Drehraten eine bessere Skalenfaktorfehlerinformation vorliegt, steht aber entgegen, daß die zugehörige Signalverarbeitungseinrichtung einen vergleichsweise hohen Frequenzbereich verarbeiten muß. Andererseits aber führt das bekannte Rampenrückstellverfahren, wie dargestellt, im Bereich der Drehrate Null zum Fehlen der Skalenfaktorfehlerinformation und damit zu Driftproblemen.

Der Erfindung liegt damit die Aufgabe zugrunde, den Unempfindlichkeitsbereich eines faseroptischen Drehratensensors bei kleinen Drehraten, d. h. den dargestellten "Lock-in-Effekt", zu vermeiden und gut zu verarbeitende Signale zur Regelung des Skalenfaktors zu gewinnen.

Als Vorstufe zur Lösung der gestellten Aufgabe und um das Verständnis der Erfindung zu erleichtern, seien zunächst noch einmal die bei den bekannten, in der oben erwähnten Literatur beschriebenen Verfahren angewendeten Signalverarbeitungsprozesse betrachtet:
Dem Phasenmodulator PM (z. B. Schaltung nach Fig. 3) wird ein elektrisches Signal zugeführt, das aus zwei Komponenten besteht. Die erste Komponente ist ein Modulationssignal, das in bekannter Weise eine Grundaussteuerung des Interferometers zu den Umkehrpunkten $\pm\pi/2$, $\pm3\pi/2$ ... der Interferometerkennlinie vornimmt. Die zweite Komponente ist das Rückstellsignal, welches den drehratenempfindlichen Sagnac-Effekt kompensieren soll und von dem Regelsystem bereitgestellt wird, das die Summe aus gemessener Sagnac-Phase und Rückstellphase zu Null macht. Beide Komponenten, und damit auch das zusammengesetzte Ansteuersignal, sind zeitdiskrete Treppenfunktionen mit einer Taktzeit $t_0$, die gleich der Durchlaufzeit des Lichts durch die Faserspule FS ist. Die durch den Phasenmodulator PM erzeugte Phase ist proportional zur Differenz zweier aufeinanderfolgender Werte des zeitdiskreten Ansteuersignals.

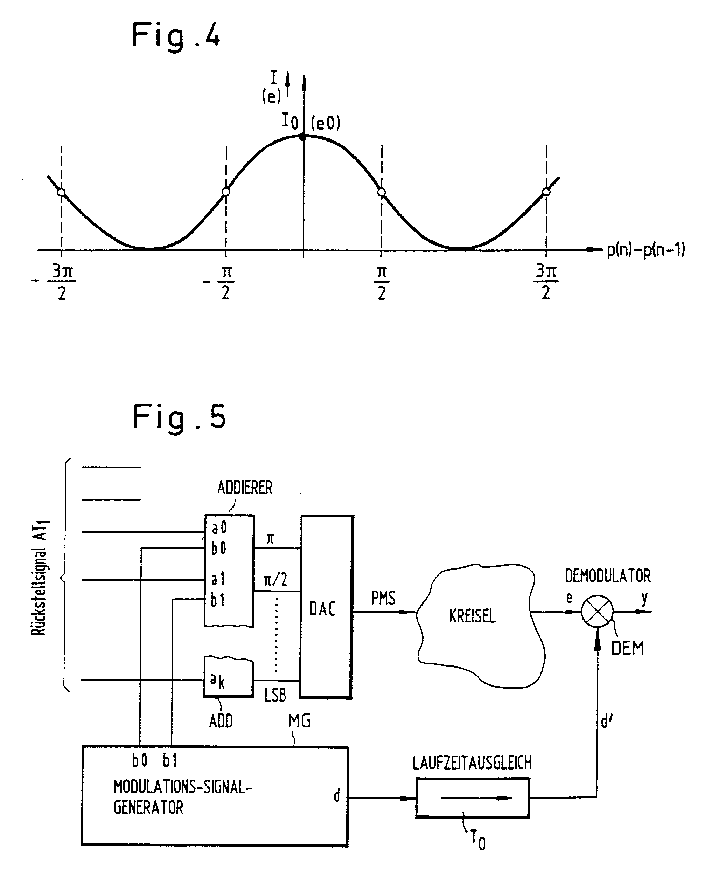

Da die Interferometerkennlinie (Fig. 4) eine in $2\pi$ periodische Funktion ist, kann der Spannungsbereich des Ansteuersignals für den Phasenmodulator PM eingeschränkt werden, indem ein passendes ganzzahliges Vielfaches der Spannung, die der Phase $2\pi$ entspricht, zum Ansteuersignal hinzuaddiert wird. Hierzu wird gemäß dem Stand der Technik nach der genannten US-Patentschrift eine Modulo-Operation eingesetzt, die das Ansteuersignal auf einen dem Intervall von 0 bis $2\pi$ entsprechenden Bereich eingrenzt. Diese Operation wird auch als "Rampenüberlauf" bezeichnet. Die durch den Photodetektor PD gemessene Lichtleistung I ist dem Wert der momentan angesteuerten Interferometerkennlinie proportional. Da die Steigung in den angesteuerten Umkehrpunkten der Kennlinie aufgrund des oben dargestellten Modulationsprozesses ständig ihr Vorzeichen ändert, muß der Demodulator diesen Effekt wieder rückgängig machen.

Neben dem oben genannten Zweck, nämlich durch Ansteuerung der Umkehrpunkte der Interferometerkennlinie ein drehratenempfindliches Signal zu gewinnen, muß das Modulationsverfahren noch den weiteren Zweck der Gewinnung des Skalenfaktorfehlersignals erfüllen. Um diese zusätzliche Information zu erhalten, müssen ständig mindestens drei verschiedene Umkehrpunkte angesteuert werden. Bei dem in der Druckschrift US-A-4 705 399 beschriebenen Verfahren wird dies durch den automatisch auftretenden Rampenüberlauf erreicht, der dafür sorgt, daß, abhängig vom Momentanwert des Rückstellsignals, verschiedene Paare von Umkehrpunkten, und zwar abwechselnd Punkte mit positiver und negativer Steigung der Interferometerkennlinie, angesteuert werden. Demzufolge muß die Demodulationsfunktion eine periodische Funktion der Zeit sein, die mit der Frequenz $\frac{1}{2}t_0$ die Werte +1 und -1 annimmt. Damit aber ist der Demodulatoreingang aus den oben erläuterten Gründen empfindlich gegen Signale, die Anteile mit dieser Frequenz enthalten. Wird ein derartiges Signal in den Demodulatoreingang eingekoppelt, so wird dem System eine Drehrate vorgetäuscht, die tatsächlich nicht vorhanden ist, d. h. es entsteht ein Bias-Fehler.

Wenn, wie in der genannten US-Patentschrift erläutert, die Skalenfaktormodulation durch die Rampenüberläufe erzeugt wird, d. h. wenn der Modulationshub vom Rückstellsignal abhängig ist, dann ist auch der Bias-Fehler vom Rückstellsignal abhängig und die oben erläuterten Bedingungen für das Auftreten einer Lock-in-Zone im Bereich geringer Drehraten liegen vor.

Mit der europäischen Patentanmeldung Nr. 90 100 103.2 wurde bereits vorgeschlagen, diesen Effekt dadurch zu beseitigen, daß die Skalenfaktormodulation unabhängig vom Rückstellsignal erzeugt wird. Dann verbleibt zwar ein Bias-Fehler, der jedoch durch ein geeignetes Taktverhältnis für die Skalenfaktormodulation im Mittel zu Null gemacht werden kann. Die vom Bias-Fehler hervorgerufene Unempfindlichkeitszone tritt nicht mehr auf. Die bereits vorgeschlagene Lösung des aufgezeigten Problems bedingt jedoch einen höheren Aussteuerbereich für den Phasenmodulator PM, nämlich von $7\pi/2$ gegenüber $2\pi$ bei den anderen bekannten Verfahren, z. B. nach der erwähnten US-Patentschrift.

Als Grundlage der Erfindung wurde erkannt, daß das Auftreten von Bias-Fehlern, die durch Einkopplung von Störsignalen in den Demodulatoreingang entstehen, durch die Verwendung eines Demodulationssignals unterdrückt werden kann, das statistisch unabhängig ist von allen als Ursache von Störsignalen in Betracht kommenden Signalquellen.

Auf der Grundlage und unter Verwendung eines faseroptischen Sagnac-Interferometers gemäß dem eingangs angegebenen Oberbegriff des Patentanspruchs 1 besteht die erfindungsgemäße technische Lehre darin, daß der zweite Signalanteil des den Phasenmodulator beaufschlagenden zusammengesetzten Modulationssignals aus der Summe von zwei Anteilen gebildet wird, von denen der erste Anteil aus wechselweise aufeinanderfolgenden Werten 0 und $\pi/2$ gebildet ist und der zweite Anteil aus weitgehend korrelationsfrei aufeinanderfolgenden Werten 0 und $\pi$ gebildet ist und daß der Synchrondemodulator mit dem Produkt aus vier Faktoren angesteuert wird, von denen der erste Faktor konstant den Wert -1 hat, der zweite Faktor -1 ist, wenn der zweite Anteil des genannten zweiten Signalanteils den Wert 0 hat, jedoch +1 ist, wenn der zweite Anteil den Wert $\pi$ hat, der dritte Faktor -1 ist, wenn der zweite Anteil aus dem letzten vorhergehenden Modulationstakt den Wert 0 hat, jedoch +1 ist, wenn der zweite Anteil aus dem letzten vorhergehenden Modulationstakt den Wert $\pi$ hatte, und der vierte Faktor dann -1 ist, wenn der erste Anteil den Wert 0 hat, jedoch +1 ist, wenn der erste Anteil den Wert $\pi/2$ hat, und daß das Produkt der vier Faktoren um einen Laufzeitausgleich korrigiert wird, der der Zeit $t_0$ sowie der Prozeßzeit für die Summation zur Gewinnung des zweiten Signalanteils, zur Zusammensetzung des ersten und zweiten Signalanteils zum Ansteuersignal für den Phasenmodulator und der Digital/Analogwandlung entspricht.

Die Erfindung und vorteilhafte Einzelheiten werden nachfolgend unter Bezug auf die Zeichnung zunächst an einer grundsätzlichen und sodann anhand verschiedener abgewandelter Ausführungsformen näher erläutert. Es zeigen:

Fig. 1 die bereits erläuterte, beim Stand der Technik von der Modulationshubänderung, also dem Betriebsmodus, abhängige Änderung der Rampensteigung des Rückstellsignals;

Fig. 2 die ebenfalls bereits erläuterte Entstehung des Lock-in-Effekts bei kleinen Drehraten;

Fig. 3 eine ebenfalls bereits erläuterte, dem Stand der Technik entsprechende Anordnung eines faseroptischen Interferometers mit digitaler Verarbeitung des Drehratensignals und Erzeugung der Modulationshubsignale und des Rampenrückstellsignals;

Fig. 4 die Interferometerkennlinie mit eingetragenen Umkehrpunkten;

Fig. 5 eine schematische, jedoch prinzipielle, Blockschaltbildanordnung zur Erzeugung von Modulations- und Demodulationssignalen gemäß dem Grundprinzip der Erfindung;

Fig. 6 den Aufbau eines Modulationssignalgenerators gemäß der Erfindung;

Fig. 7 eine dem Blockschaltbild der Fig. 3 (Stand der Technik) entsprechende Anwendung der Erfindung;

Fig. 8 einen der Fig. 7 entsprechenden Interferometeraufbau, jedoch mit erfindungsgemäß ergänzter Skalenfaktorkorrekturschaltung;

Fig. 9 eine gegenüber Fig. 7 abgewandelte Blockschaltbildanordnung, bei der (vgl. Patentanspruch 3) die Analog/Digitalwandlung des Interferometersignals unmittelbar nach einer Signalverstärkung erfolgt

EP 0 441 998 B1

und dementsprechend eine digitale Synchrondemodulation angewendet wird;

Fig. 10 einen der Fig. 9 entsprechenden Interferometeraufbau, jedoch wiederum (entsprechend Fig. 8) mit ergänzter Skalenfaktorkorrekturschaltung;

Fig. 11 die Prinzipanordnung für eine digitale Synchrondemodulation; und

Fig. 12 einen prinzipiellen Blockschaltbildaufbau, bei dem der gesamte Verarbeitungsprozeß zur Bereitstellung des Ansteuersignals für den Phasenmodulator in einer zentralen Recheneinheit abläuft.

Fig. 5 zeigt in prinzipieller Anordnung den für die Erfindung wesentlichen Teil einer Ringinterferometeranordnung, nämlich diejenigen Teile und Baugruppen, die für die Modulation und Demodulation wichtig sind. Ein Modulations-Signalgenerator MG erzeugt ein Modulationssignal, bestehend aus Bits b0 und b1 mit den Wertigkeiten $\pi$ bzw. $\pi/2$. Dieses Modulationssignal wird stellenwertrichtig zu dem von der Regeleinrichtung (vgl. Fig. 3) gelieferten Rückstellsignal $AT_1$ addiert, wobei dem höchstwertigen Bit (HSB-Bit) a0 die Wertigkeit $\pi$ zugeordnet ist. Das Summensignal PMS steuert über den Digital/Analog-Wandler DA den Phasenmodulator PM und damit kurz gesagt, den "Kreisel" an. Das HSB-Bit hat, wie erwähnt, die Wertigkeit $\pi$; alle höherwertigen Bits werden unterdrückt, so daß sich automatisch eine Modulo-$2\pi$-Operation ergibt. Das Ausgangssignal PMS des Digital/Analog-Wandlers DA durchläuft die Interferometeranordnung oder den "Kreiselpfad" und gelangt als ein der empfangenen Lichtintensität I proportionales Signal e auf den Eingang des Demodulators DEM. Das Demodulationssignal d liefert der Modulations-Signalgenerator MG und gelangt nach einem Laufzeitausgleich $T_0$ an den Demodulator DEM. Der Laufzeitausgleich $T_0$ kompensiert die durch die Digital/Analog-Wandlung und die im Kreiselpfad liegenden Filter sowie durch die Analog/Digital-Wandlung hervorgerufenen Signallaufzeiten, so daß das Demodulationssignal zum empfangenen Signal e "paßt".

Um die erwähnte statistische Unabhängigkeit des Demodulationssignals d von allen anderen als Störquellen in Betracht kommenden Signalen zu garantieren, enthält der Modulations-Signalgenerator einen Zufallszahlengenerator, aus dem die Signale b0, b1 und d abgeleitet werden. Alternativ können auch fest abgespeicherte Signalmuster verwendet werden, die so zusammengesetzt werden, daß sich die geforderte statistische Unabhängigkeit ergibt. Für die folgende Beschreibung wird von der Lösung mit einem Zufallszahlengenerator ausgegangen.

Wie sich aus der Interferometerkennlinie gemäß Fig. 4 ablesen läßt, liegen die anzusteuernden Umkehrpunkte der Steigung bei ungeradzahligen Vielfachen von $\pi/2$. Sofern keine Drehrate vorliegt (Ruhezustand), besteht die Interferometerphase aus der Differenz der momentanen Modulatorphase p(n) und der zeitlich vorangegangenen Modulatorphase p(n-1). Damit diese Differenz stets ein ungeradzahliges Vielfaches von $\pi/2$ ist, muß p(n) abwechselnd ein geradzahliges bzw. ungeradzahliges Vielfaches von $\pi/2$ sein, d. h., das vom Modulations-Signalgenerator MG gelieferte Bit b1 mit der Wertigkeit $\pi/2$ muß ständig oszillieren:

$$b1\,(n)\ =\ \{...0,1,0,1,0,1,0,1...\}$$

Dieses Bit b1(n) wird erzeugt aus einem internen Signal s(n)

$$s(n)\ =\ (-1)^n$$

$$b1(n)\ =\ (s(n)+1)/2$$

Das vom Modulations-Signalgenerator MG gelieferte Bit b0 ist zunächst beliebig und kann als Freiheitsgrad für die Auswahl von Punkten mit positiver oder negativer Steigung der Interferometerkennlinie verwendet werden. Bei der hier vorgeschlagenen Lösung wird das Bit b0 aus der von einem Zufallszahlengenerator gelieferten Zahlenfolge R(n) abgeleitet, die gleich verteilt und statistisch unabhängig den Werten -1 oder 1 entspricht. Das Bit b0 ergibt sich hieraus durch

$$b0(n)\ =\ (r(n)+1)/2$$

Das Vorzeichen des jeweils angesprungenen Punkts der Interferometerkennlinie ergibt sich somit aus

$$d(n)\ =\ -r(n)\cdot r(n-1)\cdot s(n)$$

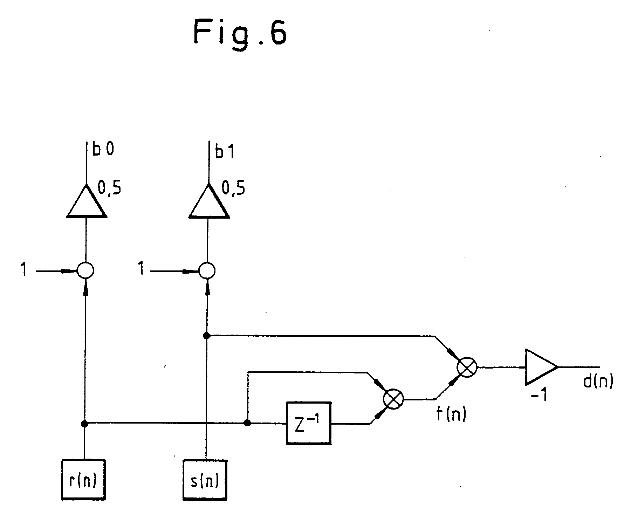

Dieses so erzeugte Vorzeichensignal (vgl. Fig. 6) wird, nachdem es den Laufzeitausgleich $T_0$ passiert hat, zur Demodulation des empfangenen Signals e verwendet.

Der aus den obigen Gleichungen folgende Aufbau des Modulations-Signalgenerators MG geht aus Fig. 6 hervor. Das Signal d(n) ist von s(n) statistisch unabhängig, obwohl s(n) zu seiner Erzeugung herangezogen wird. Bei der Bildung von d(n) wird aber s(n) durch die Multiplikation mit dem aus Zufallszahlen gebildeten Produkt $r(n)\cdot r(n-1)$ wieder vollständig verwürfelt. Das Demodulationssignal d(n) ist aber auch von r(n) statistisch unabhängig, weil $t(n)=r(n)\cdot r(n-1)$ von r(n) statistisch unabhängig ist, d. h., daß die Kreuzkorrelierte Crt(i) zwischen r(n) und t(n) identisch gleich Null ist. Dieses Ergebnis ist offensichtlich für i ungleich 0 und 1, da dann die um mehr als 0 oder 1 Positionen gegeneinander verschobenen Glieder der Folgen r(n) und t(n) keine gemeinsame Information mehr tragen. Für i=0 oder 1 ergibt sich, daß die Kreuzkorrelierte von Crt(0) bzw. Crt(1) dem Mittelwert der Folge r(n) entspricht, welcher voraussetzungsgemäß gleich 0 ist.

Die Korrelation zwischen r(n) und t(n) läßt sich wie folgt darstellen:

Es gilt $t(n) = r(n)\cdot r(n-1)$

7

$$Crt(i) = \lim_{N \to \infty} \frac{1}{2N} \sum_{n=-N}^{N} r(n) \cdot t(n+i)$$

$$Crt(0) = \lim_{N \to \infty} \frac{1}{2N} \sum_{n=-N}^{N} \underbrace{r(n) \cdot r(n) \cdot r(n-1)}_{=1} = \overline{r(n)} = 0$$

$$Crt(1) = \lim_{N \to \infty} \frac{1}{2N} \sum_{n=-N}^{N} \underbrace{r(n) \cdot r(n) \cdot r(n+1)}_{=1} = \overline{r(n)} = 0$$

Für $i \neq 0$ und $i \neq 1$:

$$Crt(i) = 0 \text{ evident!}$$

d. h.:

$$Crt(i) = 0 \text{ für alle } i$$

Daraus ergibt sich, daß d(n) von allen beim Modulationsprozeß auftretenden Signalen sowie vom Rückstellsignal und allen aus diesen abgeleiteten Signalen im linearen Sinn statistisch unabhängig ist, so daß die eingangs aufgestellten Voraussetzungen erfüllt sind.

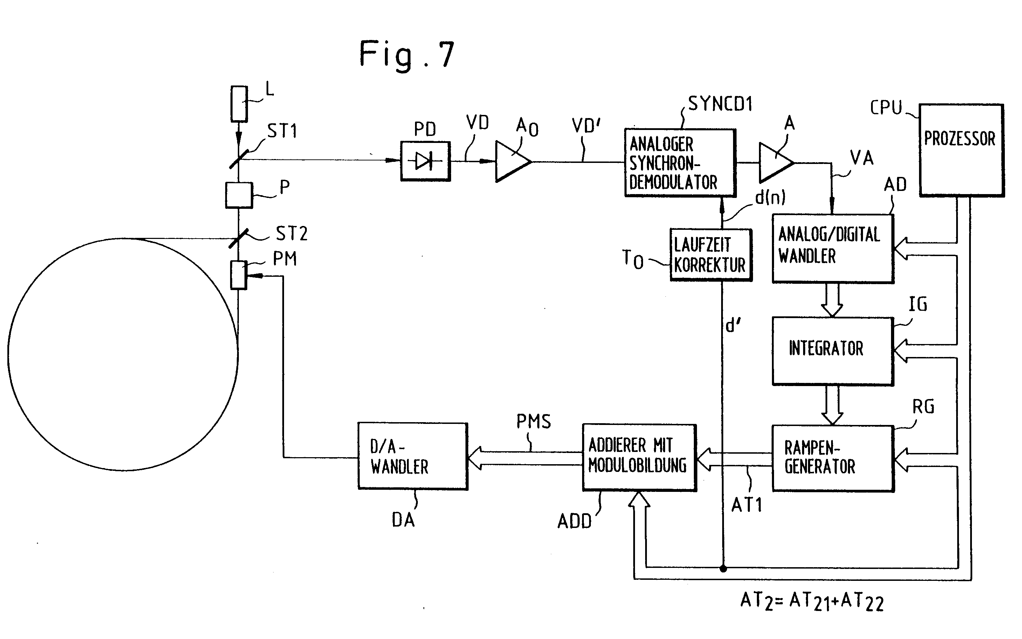

Die Fig. 7 zeigt ein erstes konkretes Ausführungsbeispiel einer erfindungsgemäßen Interferometeranordnung, bei der jedoch zunächst die Skalenfaktorregelung noch nicht enthalten ist. Die aus der Fig. 3 bekannten und dem Stand der Technik entsprechenden Baugruppen werden nicht erneut erläutert.

Wie dargestellt, wird (vgl. auch Patentanspruch 1) ein erster Signalanteil $AT_1$ des nach Digital/Analog-Wandlung dem Phasenmodulator PM zuzuführenden Signals PMS vom Rampen-Signalgenerator RG an einen ersten Eingang eines Addierers ADD mit Modulobildung zugeführt, wobei in ihrer Funktion die Baugruppen IG (Integrator) und RG (Rampengenerator) im wesentlichen der Baugruppe GSC in Fig. 3 entsprechen. Der zweite Signalanteil $AT_2$ setzt sich aus den im Kennzeichen des Anspruchs 1 definierten Signalanteilen $AT_{21}$ und $AT_{22}$ zusammen und wird vom Prozessor CPU bereitgestellt.

Der Synchrondemodulator SYNCD1 wird entsprechend dem zweiten kennzeichnenden Merkmal des Anspruchs 1 mit dem oben abgeleiteten laufzeitkorrigierten Signal d(n) beaufschlagt.

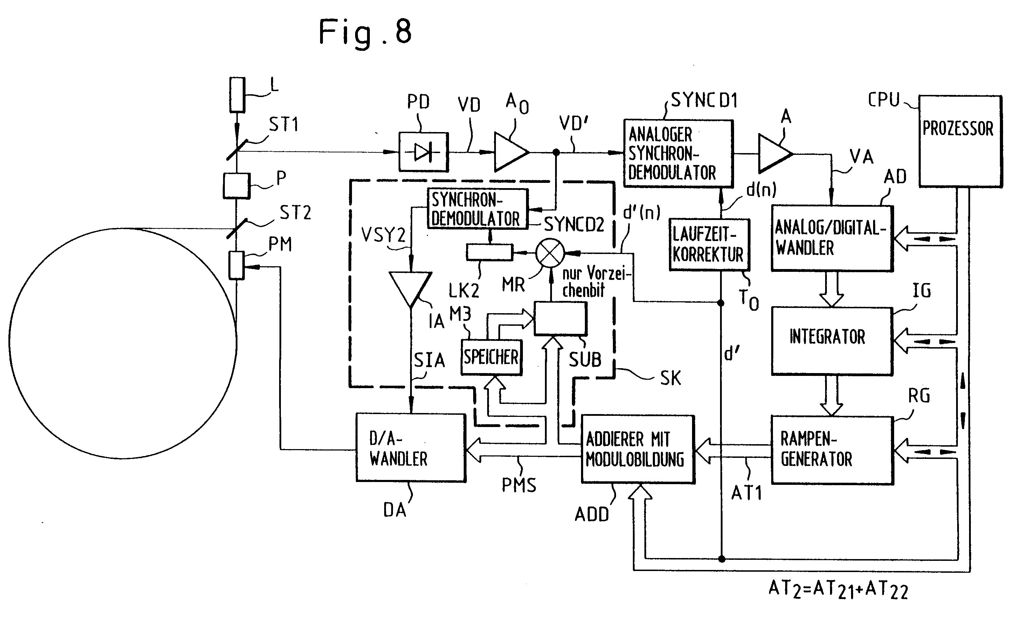

Die Darstellung der Fig. 8 entspricht derjenigen der Fig. 7, enthält jedoch als wichtige Ergänzung die im Patentanspruch 2 definierte Skalenfaktorkorrekturschaltung SK. Diese Skalenfaktorkorrekturschaltung SK umfaßt einen zweiten Synchrondemodulator SYNCD2, dessen Aufbau, dem Synchrondemodulator mit dieser Funktion in der Schaltung nach Fig. 14 von US-A-4 705 399 entsprechen kann, also im wesentlichen aus einer Anzahl von Differenzverstärkern besteht. Dem Signaleingang des Synchrondemodulators SYNCD2 wird das verstärkte Photodetektorsignal VD' zugeführt. Dem Demodulatoreingang wird das vorzeichenkorrigierte Signal d'(n) über einen Multiplizierer MR - laufzeitkorrigiert um einen angepaßten Wert $T_0$' - zugeführt, wobei der zweite Eingang des Multiplizierers MR vom Vorzeichenbit eines Subtrahierers SUB beaufschlagt ist, welcher fortlaufend den letzten Ausgangswert des Addierers ADD, erfaßt über einen Speicher M3, vom aktueller, Ausgangswert des Addierers ADD subtrahiert. Das Ausgangssignal VSY2 des zweiten Synchrondemodulators SYNCD2 speist den Eingang eines integrierenden Verstärkers IA, der im wesentlichen ein nach regelungstechnischen Gesichtspunkten dimensioniertes Filter darstellt und dessen Ausgangssignal SIA zumindest einem Anteil des zeitigen Integrals des Eingangssignals VSY2 entspricht. Das Signal SIA wird als Analogsignal einem Korrektureingang des Digital/Analog-Wandlers DA zugeführt, der als Ausgangsgröße das den Phasenmodulator PM beaufschlagende Signal liefert, das im wesentlichen proportional ist zum Produkt der Signale PMS (digital) und SIA (analog).

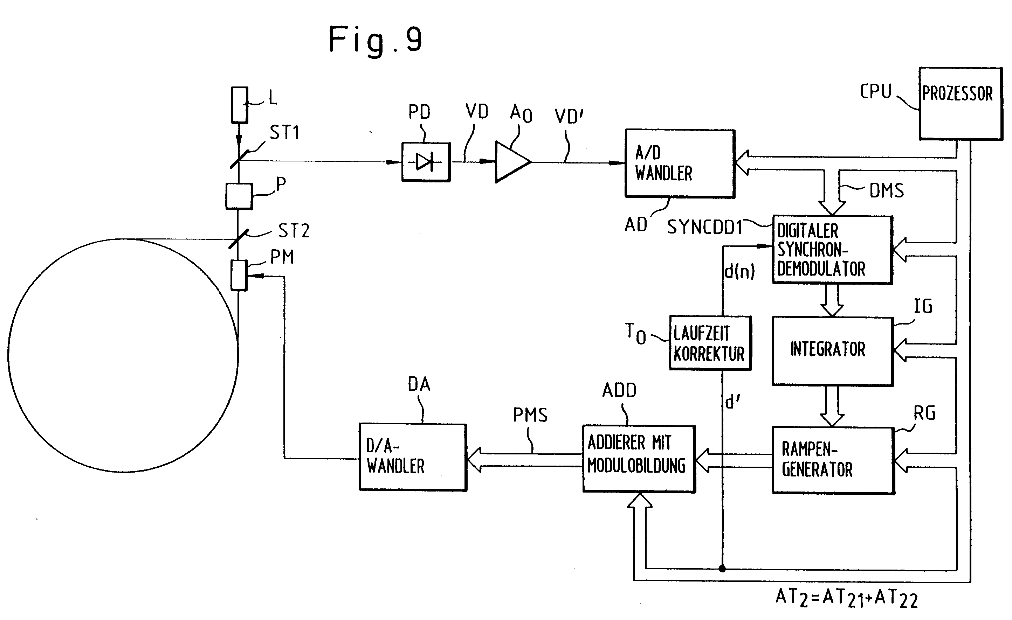

Bei der Schaltungsanordnung nach Fig. 9, deren Darstellungsweise jener der Fig. 7 entspricht, wird das verstärkte Photodetektorsignal VD' unmittelbar, also vor jedem weiteren Arbeitsprozeß, analog/digital-gewandelt und beaufschlagt dann einen digitalen Synchrondemodulator SYNCDD1, an dessen Demodulatoreingang das Signal d(n) anliegt. Ansonsten entspricht der Aufbau der Anordnung nach Fig. 9 im wesentlichen jener nach Fig. 7.

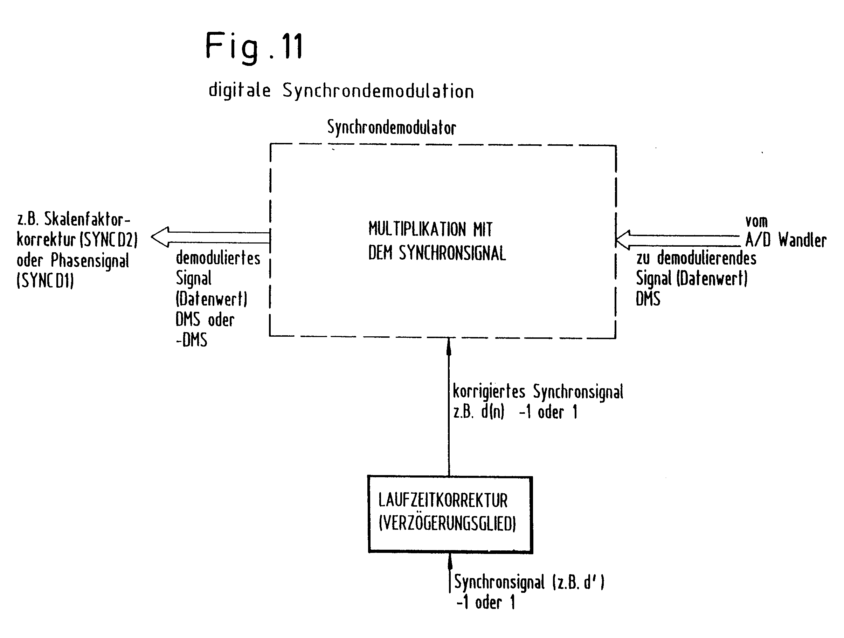

Das Prinzip der bei Fig. 9 angewendeten Synchrondemodulation ist in Fig. 11 veranschaulicht. Die Darstellung der Fig. 11 ist für den Fachmann unmittelbar aus sich heraus verständlich und wird als Teil der Erfindungsbeschreibung angesehen.

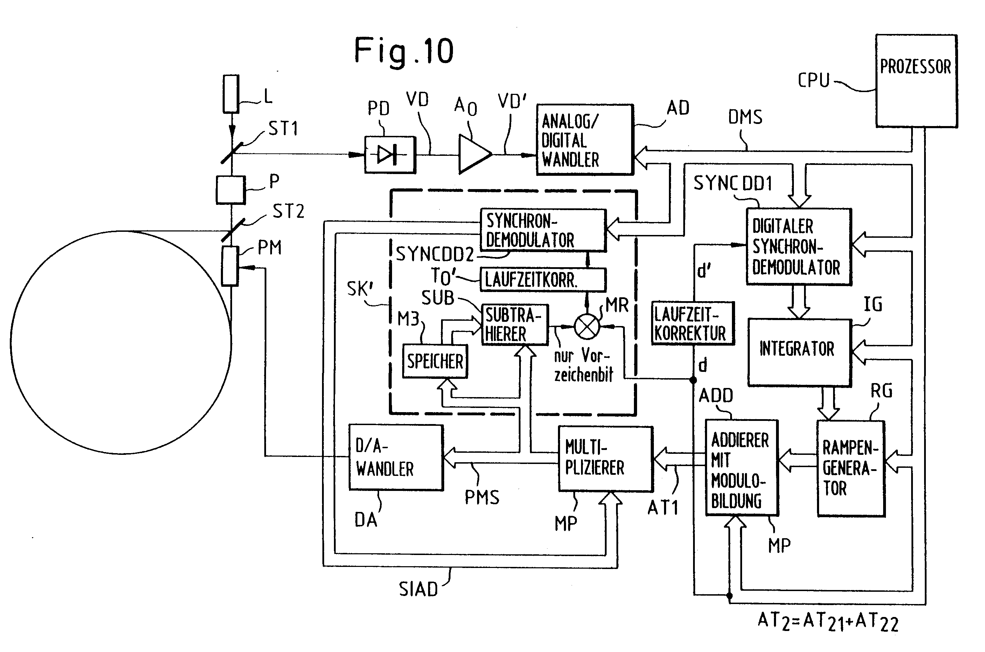

Die Darstellung der Fig. 10 entspricht wiederum jener nach Fig. 8, jedoch ist die Skalenfaktorregelung SK vollständig digital verwirklicht. Der zweite, vom Ausgangssignal des Analog/Digital-Wandlers AD mit dem Datensignal DMS beaufschlagte Synchrondemodulator SYNCDD2 ist ebenfalls als digitaler Demodulator verwirklicht, der ein ausgangsseitiges Skalenfaktor-Korrektursignal SIAD liefert, das einen Eingang eines weiteren Multiplizierers MP beaufschlagt, an dessen anderem Eingang das Ausgangssignal des Addierers ADD liegt, so daß der Digital/Analog-Wandler DA bereits mit dem skalenfaktorkorrigierten Signal versorgt wird.

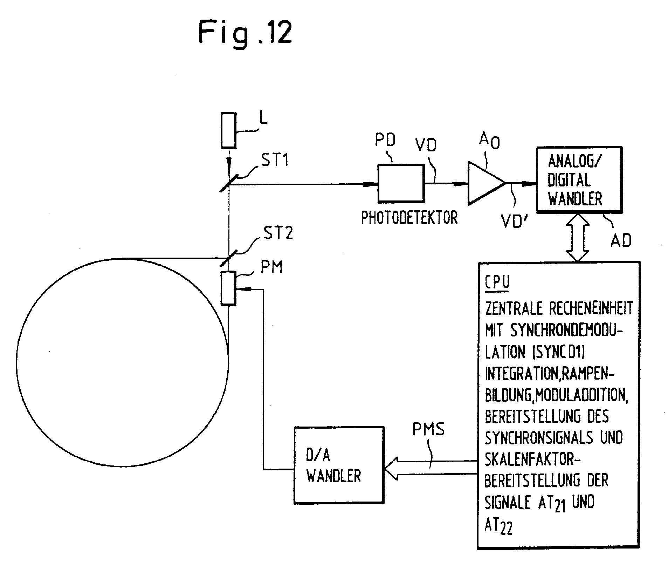

Die Anordnung nach Fig. 12 zeigt schließlich eine reine "Digitallösung", welche hinsichtlich ihrer Funktion jener nach Fig. 10 entspricht. Hier sind sämtliche Funktionen der Regelstrecke in die zentrale Recheneinheit CPU verlegt, nämlich

- die Synchrondemodulation des Synchrondemodulators SYNCDD1,
- die Integrationsfunktion des Integrators IG,
- die Erzeugung des Rampensignals im Rampengenerator RG,
- die Bereitstellung des gegebenenfalls laufzeitkorrigierten Synchronsignals d bzw. d',
- die Bereitstellung des Skalenfaktor-Korrektursignals SIAD,
- die Funktion des Multiplizierers MP zur Bildung des ersten Signalanteils $AT_1$ sowie
- die Bereitstellung der Anteile $AT_{21}$ und $AT_{22}$ des zweiten Signalanteils für das Phasenmodulator-Ansteuersignal PMS.

Mit der Erfindung wurde ein Modulationsverfahren für das Ansteuersignal eines Phasenmodulators eines faseroptischen Ringinterferometers zur Drehratenmessung bereitgestellt, welches die durch elektromagnetische Überkopplungen verursachten Biasfehler und darauf beruhende Unempfindlichkeitsbereiche vermeidet, wie sie beim Stand der Technik auftreten, ohne den notwendigen Aussteuerbereich für den Phasenmodulator zu vergrößern.

Die erfindungsgemäße Verwendung von statistisch unabhängigen Zufallsgeneratoren eignet sich auch zur Vermeidung von Übersprecheffekten von benachbarten Elektronikbaugruppen, wenn auf engem Raum eine mehrachsige Drehraten-Sensoranordnung aufgebaut werden soll.

## Patentansprüche

1. Faseroptisches Sagnac-Interferometer zur Drehratenmessung, bei dem
   - zwei aus einer Lichtquelle (L) stammende, durch einen Polarisator (P) polarisierte und über einen Strahlteiler (ST2) erzeugte Lichtstrahlen in entgegengesetzten Richtungen in eine Faserspule (FS) eingestrahlt und anschließend wiedervereinigt werden,
   - das entstehende Interferenzbild nach Durchlauf durch den Polarisator (P) eine Detektoreinrichtung (PD) beaufschlagt, deren Ausgangssignal (VD) der Lichtintensität des Interferenzbilds entspricht,
   - die beiden Lichtstrahlen mittels eines in der Faserspule (FS) liegenden Phasenmodulators (PM) durch ein aus mehreren variablen Anteilen ($AT_i$) bestehendes Signal moduliert werden, von denen
     -- ein erster Signalanteil ($AT_1$) ein über einen Integrationsprozeß erzeugtes Rampensignal ist, welches nichtreziproke inkrementale Phasenverschiebungen der beiden Lichtstrahlen kompensiert,
     -- ein zweiter Signalanteil ($AT_2$) einen ganzzahligen positiven Wert von $\pi/2$ jeweils für eine Zeit $t_0$ mit $t_0$ = Laufzeit jedes der Lichtstrahlen durch die Faserspule (FS) im Ruhezustand darstellt,
   - die beiden Signalanteile ($AT_1$, $AT_2$) in einem Addierer (ADD) addiert und die Summe durch eine Modulo-Operation auf einen Wert von $2\pi$ begrenzt wird,
   - das verstärkte Photodetektorausgangssignal (VD') einem mit der Frequenz $f_0 = I/t_0$ getakteten ersten Synchrondemodulator (SYNCD1; SYNCDD1) zugeführt wird,
   - das demodulierte Ausgangssignal (VA) integriert und nach Digital/Analog-Wandlung (DA) zur Erzeugung des Rampensignals ($AT_1$) auf den Phasenmodulator (PM) zurückgeführt wird, um nichtreziproke Phasenverschiebungen der Lichtstrahlen zu kompensieren, und bei dem
   - ein Prozessor (CPU) die Steuer- und Synchronisationssignale für den ersten Synchrondemodulator (SYNCD1; SYNCDD1), den Analog/Digital-Wandler (AD), den digitalen Integrator (IG) bzw. den Rampengenerator (RG) liefert,
     **dadurch gekennzeichnet, daß**
   - der zweite Signalanteil ($AT_2$) aus der Summe von zwei Anteilen ($AT_{2j, j=1,2}$) besteht, von denen
     -- der erste Anteil ($AT_{21}$) aus wechselweise aufeinanderfolgenden Werten 0 und $\pi/2$ gebildet ist und
     -- der zweite Anteil ($AT_{22}$) aus weitgehend korrelationsfrei aufeinanderfolgenden Werten 0 und $\pi$ gebildet ist,
   - der Synchrondemodulator (SYNCD1; SYNCDD1) mit dem laufzeitkorrigierten Produkt (d(n)) aus vier Faktoren angesteuert ist, von denen
     -- der erste Faktor konstant den Wert -1 hat,
     -- der zweite Faktor -1 ist, wenn der zweite Anteil ($AT_{22}$) den Wert 0 hat, jedoch +1 ist, wenn der zweite Anteil ($AT_{22}$) den Wert $\pi$ hat,

-- der dritte Faktor -1 ist, wenn der zweite Anteil ($AT_{22}$) aus dem letzten vorhergehenden Modulationstakt den Wert 0 hat, jedoch +1 ist, wenn der zweite Anteil ($AT_{22}$) aus dem vorhergehenden Modulationstakt den Wert $\pi$ hatte,

-- der vierte Faktor -1 ist, wenn der erste Anteil ($AT_{22}$) den Wert 0 hat, jedoch +1 ist, wenn der erste Anteil ($AT_{21}$) den Wert $\pi/2$ hat, und daß

- das Produkt dieser vier Faktoren vor Zuführung zum Synchrondemodulator (SYNCD1; SYNCDD1) um einen Laufzeitausgleich ($T_0$) korrigiert wird, der der Zeit $t_0$ sowie der Prozeßzeit für die Summation zur Gewinnung des zweiten Signalanteils ($AT_2$), zur Zusammensetzung des ersten und zweiten Signalanteils ($AT_1$, $AT_2$) zum Ansteuersignal (PMS) für den Phasenmodulator (PM) und der Digital/Analog-Wandlung (DA) entspricht.

2.  Interferometer nach Anspruch 1, **dadurch gekennzeichnet,** daß

- eine Skalenfaktor-Korrekturschaltung (SK) vorgesehen ist, die das Vorzeichen der Differenz zwischen dem aktuellen Eingangswert des Digital/Analog-Wandlers (DA) und dem letzten Eingangswert des Digital/Analog-Wandlers (DA) mit dem Vorzeichen des aktuellen Ansteuerwerts (d) des ersten Synchrondemodulators (SYNCD1) vergleicht und

- mit dem Vergleichswert - nach einem Laufzeitausgleich - im Takt der Frequenz $t_0$ einen zweiten Synchrondemodulator (SYNCD2) ansteuert, dessen analoges, zu demodulierendes Signal das verstärkte Signal (VD') des Photodetektors (PD) ist und über einen integrierenden Verstärker (IA) ein analoges Skalenfaktor-Korrektursignal (SIA) an einen Referenzeingang des Digital/Analog-Wandlers (DA) abgibt.

3.  Interferometer nach Anspruch 1, **dadurch gekennzeichnet,** daß das verstärkte Photodetektorausgangssignal (VD') vor der Synchrondemodulation digitalisiert wird und daß die Synchrondemodulation als digitaler Prozeß ausgeführt wird.

4.  Interferometer nach Anspruch 3, **dadurch gekennzeichnet,** daß

- eine digitale Skalenfaktor-Korrekturschaltung (SK') vorgesehen ist, die das Vorzeichen der Differenz zwischen dem aktuellen Eingangswert des Digital/Analog-Wandlers (DA) und dem letzten Eingangswert des Digital/Analog-Wandlers (DA) mit dem Vorzeichen des aktuellen Ansteuerwerts des ersten Synchrondemodulators (SYNCDD1) vergleicht und

- mit dem Vergleichswert - nach einem Laufzeitausgleich - im Takt der Frequenz $1/t_0$ einen zweiten digitalen Synchrondemodulator (SYNCDD2) ansteuert, dessen digitales, zu demodulierendes Signal der Ausgangswert des Analog/Digital-Wandlers (AD) ist und der über einen integrierenden, digitalen Verstärker ein digitales Skalenfaktor-Korrektursignal (SIAD) erzeugt, mit dem der erste Signalanteil ($AT_1$) vor seiner Zusammensetzung mit dem zweiten Signalanteil ($AT_2$) multipliziert wird.

5.  Interferometer nach Anspruch 1 oder 2, **dadurch gekennzeichnet,** daß die digitalen Funktionen Integration, Rampensignalbildung, Addition mit Modulo-Bildung, die Bereitstellung der ersten und zweiten Anteile ($AT_{21}$ und $AT_{22}$) des zweiten Signalanteils ($AT_2$) sowie deren Summation und die Bereitstellung der Synchronsignale für die Synchrondemodulatoren (SYNCD1 und SYNCD2) in einem zentralen Rechner (Prozessor CPU) durchgeführt werden.

6.  Interferometer nach Anspruch 3 oder 4, **dadurch gekennzeichnet,** daß die digitalen Funktionen Integration, Rampensignalbildung, Addition mit Modulo-Bildung, die Bereitstellung der ersten und zweiten Anteile ($AT_{21}$ und $AT_{22}$) sowie deren Summation zum zweiten Signalanteil ($AT_2$) und die Demodulation in den digitalen Synchrondemodulatoren (SYNCDD1 bzw. SYNCDD2) in einem zentralen Rechner (Prozessor CPU) durchgeführt werden.

7.  Interferometer nach einem der vorhergehenden Ansprüche, **dadurch gekennzeichnet,** daß die weitgehend korrelationsfreie Folge der Werte 0 und $\pi$ aus einem Muster vorgespeicherter Werte entnommen wird.

## Claims

1.  Fibre-optic Sagnac interferometer for measurement of rate of rotation, in which

- two light beams originating from a light source (L), polarised by a polariser (P) and generated via a beam splitter (ST2) are irradiated into a fibre coil (FS) in opposite directions and subsequently reunited,
- after traversing the polariser (P) the interference pattern produced is applied to a detector device (PD) whose output signal (VD) corresponds to the light intensity of the interference pattern,
- with the aid of a phase modulator (PM) located in the fibre coil (FS) the two light beams are modulated by a signal consisting of a plurality of variable components ($AT_i$) of which
  -- a first signal component ($AT_1$) is a ramp signal, generated by an integration process, which compensates nonreciprocal incremental phase shifts of the two light beams,
  -- a second signal component ($AT_2$) represents an integral positive value of $\pi/2$ in each case for a time $t_0$, where $t_0$ = transit time of each of the light beams through the fibre coil (FS) in the rest condition,
- the two signal components ($AT_1$, $AT_2$) are added in an adder (ADD) and the sum is limited to a value of $2\pi$ by a modulo-operation,
- the amplified photodetector output signal (VD') is fed to a first synchronous demodulator (SYNCD1; SYNCDD1) clocked with the frequency $f_0 = 1/t_0$,
- the demodulated output signal (VA) is integrated and fed back after digital-to-analog conversion (DA) to the phase modulator (PM) to generate the ramp signal ($AT_1$) in order to compensate nonreciprocal phase shifts of the light beams, and in which
- a processor (CPU) supplies the control and synchronisation signals for the first synchronous demodulator (SYNCD1; SYNCDD1), the analog-to-digital converter (AD), the digital integrator (IG) and the ramp generator (RG), respectively,
  characterised in that
- the second signal component ($AT_2$) consists of the sum of two components ($AT_{2j, \, j=1,2}$) of which
  -- the first component ($AT_{21}$) is formed from alternately consecutive values of 0 and $\pi/2$ and
  -- the second component ($AT_{22}$) is formed from consecutive values of 0 and $\pi$ which are largely free from correlation
- the synchronous demodulator (SYNCD1; SYNCDD1) is triggered by the product (d(n)), corrected for transit time, of four factors, of which
  -- the first factor constantly has the value -1,
  -- the second factor is -1 when the second component ($AT_{22}$) has the value 0 but is +1 when the second component ($AT_{22}$) has the value $\pi$,
  -- the third factor is -1 when the second component ($AT_{22}$) of the last preceding modulation clock signal has the value 0 but is +1 when the second component ($AT_{22}$) of the last preceding modulation clock signal had the value $\pi$,
  -- the fourth factor is -1 when the first component ($AT_{22}$) has the value 0 but is +1 when the first component ($AT_{22}$) has the value $\pi/2$, and in that
- before being fed to the synchronous demodulator (SYNCD1; SYNCDD1), the product of these four factors is corrected by a transit time compensation ($T_0$) which corresponds to the time $t_0$ and to the process time for the summation to obtain the second signal component ($AT_2$), to combine the first and second signal components ($AT_1$, $AT_2$) to form the trigger signal (PMS) for the phase modulator (PM) and the digital-to-analog conversion (DA).

2. Interferometer according to Claim 1, characterised in that
- a scale factor correction circuit (SK) is provided which compares the sign of the difference between the actual input value of the digital-to-analog converter (DA) and the last input value of the digital-to-analog converter (DA) with the sign of the actual trigger value (d) of the first synchronous demodulator (SYNCD1), and
- in time with the frequency $t_0$ - after a transit time compensation - triggers, by means of the comparative value, a second synchronous demodulator (SYNCD2), whose analog signal which is to be demodulated is the amplified signal (VD') of the photodetector (PD), and transmits an analog scale factor correction signal (SIA) to a reference input of the digital-to-analog converter (DA) via an integrating amplifier (IA).

3. Interferometer according to Claim 1, characterised in that the amplified photodetector output signal (VD') is digitised before the synchronous demodulation, and in that the synchronous demodulation is carried out as a digital process.

4. Interferometer according to Claim 3, characterised in that
- a digital scale factor correction circuit (SK') is provided which compares the sign of the difference

EP 0 441 998 B1

between the actual input value of the digital-to-analog converter (DA) and the last input value of the digital-to-analog converter (DA) with the sign of the actual trigger value of the first synchronous demodulator (SYNCD1) and

- in time with the frequency $1/t_0$ - after a transit time compensation - triggers, by means of the comparative value, a second digital synchronous demodulator (SYNCDD2) whose digital signal which is to be demodulated is the output value of the analog-to-digital converter (AD) and which generates via an integrating, digital amplifier a digital scale factor correction signal (SIAD) by which the first signal component ($AT_1$) is multiplied before its combination with the second signal component ($AT_2$).

5. Interferometer according to Claim 1 or 2, characterised in that the digital functions of integration, ramp signal formation, addition with modulo-formation, the provision of the first and second components ($AT_{21}$ and $AT_{22}$) of the second signal component ($AT_2$) as well as their summation and the provision of the synchronous signals for the synchronous demodulators (SYNCD1 and SYNCD2) are carried out in a central computer (processor CPU).

6. Interferometer according to Claim 3 or 4, characterised in that the digital functions of integration, ramp signal formation, addition with modulo-formation, the provision of the first and second components ($AT_{21}$ and $AT_{22}$) as well as their summation to form the second signal component ($AT_2$) and the demodulation in the digital synchronous demodulators (SYNCDD1 or SYNCDD2) are carried out in a central computer (processor CPU).

7. Interferometer according to one of the preceding claims, characterised in that the sequence, which is largely free from correlation, of the values 0 and $\pi$ is taken from a pattern of prestored values.

**Revendications**

1. Interféromètre de Sagnac à fibres optiques pour mesure de la vitesse de rotation dans lequel
   - deux faisceaux lumineux émis par une source de lumière (L), polarisés par un polariseur (P) et produits par l'intermédiaire d'un diviseur de faisceau (ST2), sont injectés dans une bobine de fibres (FS) dans des directions opposées, puis réunis à nouveau,
   - l'image interférentielle formée est transmise, après le passage par le polariseur (P), à un dispositif de détection (PD) dont le signal de sortie (VD) correspond à l'intensité lumineuse de l'image interférentielle,
   - les deux faisceaux lumineux sont modulés, au moyen d'un modulateur de phase (PM) intercalé dans la bobine de fibres (FS), par un signal avec plusieurs composantes variables ($AT_i$) dont
     -- une première composante de signal ($AT_1$) est un signal en rampe généré par l'intermédiaire d'un processus d'intégration, qui compense des déphasages incrémentaux non réciproques des deux faisceaux lumineux,
     -- une seconde composante de signal ($AT_2$) représente respectivement une valeur entière positive de $\pi/2$ pour un temps $t_0$, avec $t_0$ = temps de propagation de chaque faisceau lumineux par la bobine de fibres (FS) à l'état de repos,
   - les deux composantes de signal ($AT_1$, $AT_2$) sont additionnées dans un additionneur (ADD) et la somme est limitée par une opération modulo à une valeur de $2\pi$,
   - le signal de sortie amplifié (VD') du photodétecteur est transmis à un premier démodulateur synchrone (SYNCD1; SYNCDD1) cadencé à la fréquence $f_0 = 1/t_0$,
   - le signal de sortie démodulé (VA) est intégré et, après conversion numérique/analogique (DA), renvoyé pour la génération du signal en rampe ($AT_1$) au démodulateur de phases (PM) pour compenser des déphasages non réciproques des faisceaux lumineux, et dans lequel
   - un processeur (CPU) fournit les signaux de commande et de synchronisation pour le premier démodulateur synchrone (SYNCD1; SYNCDD1), le convertisseur analogique/numérique (AD), l'intégrateur numérique (IG) et respectivement le générateur de signal en rampe (RG),
     **caractérisé en ce**
   - que la seconde composante de signal ($AT_2$) se compose de la somme de deux composantes ($AT_{2j}$ , $j=1$ , $2$) dont
     -- la première composante ($AT_{21}$) est formée de valeurs 0 et $\pi/2$ qui se succèdent alternativement, et dont
     -- la seconde composante ($AT_{22}$) est formée de valeurs 0 et $\pi$ qui se succèdent dans une large mesure sans corrélation,
- que le démodulateur synchrone (SYNCD1; SYNCDD1) est commandé par le produit (d(n)) corrigé en temps de propagation de quatre facteurs dont
-- le premier facteur a la valeur constante de -1,
-- le second facteur est -1 si la seconde composante ($AT_{22}$) présente la valeur 0, mais +1 si la seconde composante ($AT_{22}$) présente la valeur $\pi$,
-- le troisième facteur est -1 si la seconde composante ($AT_{22}$) provenant du dernier cycle de modulation précédent présente la valeur 0, mais +1 si la seconde composante ($AT_{22}$) provenant du dernier cycle de modulation précédent avait la valeur $\pi$,
-- le quatrième facteur est -1 si la première composante ($AT_{22}$) présente la valeur 0, mais +1 si la première composante ($AT_{21}$) présente la valeur $\pi/2$, et
- que le produit de ces quatre facteurs est corrigé, avant la transmission au démodulateur synchrone (SYNCD1; SYNCDD1), d'une compensation de temps de propagation ($T_0$) qui correspond au temps $t_0$ ainsi qu'à la durée du processus pour la totalisation en vue de l'acquisition de la seconde composante de signal ($AT_2$), pour la combinaison des première et seconde composantes de signal ($AT_1$, $AT_2$) en signal de commande (PMS) pour le modulateur de phase (PM), et de la conversion numérique/analogique (DA).

2. Interféromètre selon la revendication 1, caractérisé en ce
- qu'il comprend un circuit de correction de facteur d'échelle (SK) qui compare le signe de la différence entre la valeur d'entrée momentanée du convertisseur numérique/analogique (DA) et la dernière valeur d'entrée du convertisseur numérique/analogique (DA) avec le signe de la valeur de commande momentanée (d) du premier démodulateur synchrone (SYNCD1), et
- qu'il commande avec la valeur de comparaison - après une compensation du temps de propagation - à la cadence de la fréquence $t_0$ un second démodulateur synchrone (SYNCD2) dont le signal analogique à démoduler est le signal amplifié (VD') du photodétecteur (PD), et transmet, par l'intermédiaire d'un amplificateur intégrateur (IA) un signal de correction de facteur d'échelle analogique (SIA) à une entrée de référence du convertisseur numérique/analogique (DA).

3. Interféromètre selon la revendication 1, caractérisé que le signal de sortie amplifié du photodétecteur (VD') est numérisé avant la démodulation synchrone, et que la démodulation synchrone est réalisée sous la forme d'un processus numérique.

4. Interféromètre selon la revendication 3, caractérisé en ce
- qu'il comprend un circuit de correction de facteur d'échelle numérique (SK') qui compare le signe de la différence entre la valeur d'entrée momentanée du convertisseur numérique/analogique (DA) et la dernière valeur d'entrée du convertisseur numérique/analogique (DA) avec le signe de la valeur de commande momentanée du premier démodulateur synchrone (SYNCDD1), et
- qu'il commande avec la valeur de comparaison - après une compensation du temps de propagation - à la cadence de la fréquence $1/t_0$ un second démodulateur synchrone numérique (SYNCDD2) dont le signal numérique à démoduler est la valeur de sortie du convertisseur analogique/numérique (AD), et génère, par l'intermédiaire d'un amplificateur intégrateur numérique, un signal de correction de facteur d'échelle numérique (SIAD) par lequel la première composante de signal ($AT_1$) est multipliée avant sa combinaison avec la seconde composante de signal ($AT_2$).

5. Interféromètre selon l'une des revendications 1 ou 2, caractérisé en ce que les fonctions numériques intégration, formation de signal en rampe, addition avec formation de modulo, la mise à disposition des première et seconde composantes ($AT_{21}$ et $AT_{22}$) de la seconde composante de signal ($AT_2$) ainsi que leur totalisation, et la mise à disposition des signaux de synchronisation pour les démodulateurs synchrones (SYNCD1 et SYNCD2), sont réalisées dans un ordinateur central (ProcesseurCPU).

6. Interféromètre selon l'une des revendications 3 ou 4, caractérisé en ce que les fonctions numériques intégration, formation de signal en rampe, addition avec formation de modulo, la mise à disposition des première et seconde composantes ($AT_{21}$ et $AT_{22}$) ainsi que leur addition à la seconde composante de signal ($AT_2$) et la démodulation dans les démodulateurs synchrones (SYNCDD1 et respectivement SYNCDD2) sont réalisées dans un ordinateur central (ProcesseurCPU).

7. Interféromètre selon l'une des revendications précédentes, caractérisé en ce que la série des valeurs 0 et $\pi$ dans une large mesure sans corrélation, est prélevée dans un modèle de valeurs mémorisées.

# Fig.1

Rampe + Modulation > 2π

$\phi \sim VC$

$2\pi$

$\dfrac{7\pi}{4}$

$\pm \dfrac{3\pi}{4}$ Modulation

$\pm \dfrac{\pi}{4}$

$\pi$

$\dfrac{\pi}{4}$

0

Rampen-steigung:

| Mode A | Mode B | Mode A |
|--------|--------|--------|
| $D_e + B_a$ | $D_e + B_b$ | $D_e + B_a$ |

$(B_a > B_b)$

# Fig.2

$\phi \sim VC$

Überlauf : Rampe + Modulation $> 2\pi$

$2\pi$

$\dfrac{7\pi}{4}$

$\pi$

| Mode: | A | B | A | B | A | B ....... |
|---|---|---|---|---|---|---|
| $D_e + B_{a/b}$ | $>0$ | $<0$ | $>0$ | $<0$ | $>0$ | $<0$ ....... |

$D_e + B_a > 0 \\ D_e + B_b < 0$ $\hat{=}$ Rampen-steigung

$0$      $t$

Fig. 3
(STAND DER TECHNIK)

# Fig.4

# Fig.5

# Fig.6

Fig. 7

19

# Fig.8

EP 0 441 998 B1

# Fig.9

EP 0 441 998 B1

Fig.10

# Fig.11

digitale Synchrondemodulation

Synchrondemodulator

MULTIPLIKATION MIT
DEM SYNCHRONSIGNAL

z.B. Skalenfaktorkorrektur (SYNCD2)
oder Phasensignal
(SYNCD1)

demoduliertes
Signal
(Datenwert)
DMS oder
-DMS

vom
A/D Wandler
zu demodulierendes
Signal (Datenwert)
DMS

korrigiertes Synchronsignal
z.B. d(n)  -1 oder 1

LAUFZEITKORREKTUR
(VERZÖGERUNGSGLIED)

Synchronsignal (z.B. d')
-1 oder 1

EP 0 441 998 B1

# Fig.12

ST1

L

PD    VD    A_O    ANALOG/ DIGITAL WANDLER

PHOTODETEKTOR    VD'    AD

ST2

PM

CPU

ZENTRALE RECHENEINHEIT MIT SYNCHRONDEMODU- LATION (SYNC D1) INTEGRATION, RAMPEN- BILDUNG, MODULADDITION, BEREITSTELLUNG DES SYNCHRONSIGNALS UND SKALENFAKTOR- BEREITSTELLUNG DER SIGNALE $AT_{21}$ UND $AT_{22}$

PMS

D/A WANDLER